# EUROPEAN PATENT APPLICATION

(11) **EP 1 839 939 A2**
(43) Date of publication of application: **03.10.2007**
(21) Application number: 07104718.7
(22) Date of filing: 22.03.2007
(51) Int. Cl.: B60N 2/46, B60N 2/427

(54) **An armrest assembly for a motor vehicle**

(30) Priority: 28.03.2006 US 308467
(71) Applicant: Ford Global Technologies, LLC, Dearborn, MI 48126 (US)
(72) Inventor: Govind, Shrinivas, Canton, MI 48188 (US); Mariyappa, Nagaraj, Dearborn, MI 48124 (US)
(74) Representative: Messulam, Alec Moses

(57) **Abstract**

A dynamically deconstructable armrest assembly 12 for an automotive vehicle is disclosed having an arm contact member 42 located in a cavity 40 defined by a plurality of walls 30, 34. When a compressive force having a magnitude in excess for a predetermined threshold value is directed against at least one of the walls 30, 34 this will cause the arm contact member 42 to be displaced so as to reduce the compressive strength of the armrest assembly 12.

## Description

The present invention relates to an armrest for a motor vehicle and in particular to an armrest which deforms in a controlled manner as a result of a geometry change caused by compressive force during an impact event.

Vehicle designers have drawn their attention in recent years to the provision of energy-absorbing vehicle interiors. Interior trim systems associated with the side structures of vehicles have been of particular interest as designers have sought to provide more comprehensive, or tailored, energy absorption characteristics for handling side impact events.

U.S. 6,742,830 discloses a vehicle door having at least two deformable areas, including an armrest which is caused to change its shape by bending the material of the armrest during a side impact. This construction suffers from the problem that an armrest which has sufficient strength to function properly during normal usage of the vehicle will not usually prove to be a sufficiently accommodating structure to present a softer surface to a motorist during an impact event.

U.S. 6,568,743, which is assigned to the assignee of the present invention, illustrates an armrest which is mechanically pulled down into a door trim panel in the result of an impact against the door. It is noted that the system of the '743 patent requires an impact upon a certain region of the outer portion of the door to achieve the motion of pulling the armrest downwardly, and although providing some accommodation to the motorist, its effectiveness is circumscribed by this actuation requirement.

It is an object of the invention to provide an improved armrest assembly for a motor vehicle that is less likely to cause injury to an occupant in the event of a side impact event.

According to a first aspect of the invention there is provided an armrest assembly for a motor vehicle comprising a displaceable arm contact member located in a cavity defined by a plurality of walls, the shape of at least one of the cavity and the arm contact member is such that a compressive force having a magnitude in excess of a predetermined threshold value directed against at least one of the walls will cause the arm contact member to be displaced relative to the cavity so as to reduce the compressive strength of the armrest assembly.

The armrest assembly may further comprise a cover extending over the arm contact member and the plurality of walls.

At least one of the cavity and the arm contact member may have a tapered shape so as to cause the displacement of the arm contact member when the compressive force having a magnitude in excess of a predetermined threshold value is directed against at least one of said walls.

Said cavity may have a generally rectangular plan configuration.

The arm contact member may be a plug fit within the cavity.

The cavity may be a generally frustum-shaped cavity and the arm contact member may be a generally frustum-shaped arm contact member.

The armrest may further comprise a mounting base from which the plurality of walls extend to define the cavity.

When the compressive force having a magnitude in excess of a predetermined threshold value is directed against at least one of said walls, at least a portion of the arm contact member may be expelled from the cavity.

When the compressive force having a magnitude in excess of a predetermined threshold value is directed against at least one of said walls, at least a portion of the arm contact member may be deformed and moved translationally from the cavity.

The mounting base may be a door trim panel.

One of the walls may be formed as an integral part of the door trim panel.

The plurality of walls may be formed as an integral part of the door trim panel.

The mounting base may be part of a centre storage console.

One of the walls may be formed as an integral part of the centre storage console, alternatively all of the plurality of walls may be formed as an integral part of the centre storage console.

The arm contact member may comprise a first portion extending between the plurality of walls and a second portion extending externally of said walls.

The arm contact member may be generally horizontally arranged.

The plurality of walls and the arm contact member may be made from molded plastic.

The molded plastic may be one of molded polypropylene and molded acrylonitrile butadiene styrene.

According to a second aspect of the invention there is provided a motor vehicle having at least one armrest assembly constructed in accordance with said first aspect of the invention.

It is an advantage of an armrest assembly according to the present invention that the armrest assembly will have sufficient strength to exhibit robust performance during normal operation of the vehicle, while at the same time providing a more compliant structure in an event of an impact that causes an occupant to contact the armrest.

It is another advantage that the performance characteristics of the armrest assembly are more predictable, repeatable and tunable due to the ability of the armrest to change geometry during an impact event.

The invention will now be described by way of example with reference to the accompanying drawing of which:-
Figure 1 is a rear elevation, partially in section, of an occupant seated within a vehicle adjacent to an armrest system according to the invention;
Figure 2 is a perspective view of a portion of the armrest shown in Fig.1;
Figure 2A is a sectional view of a portion of a variant of the armrest shown in Figures 1 and 2;
Figures 3, 4 and 5 illustrate the sequential deconstruction of an armrest according to the present invention as the armrest is impacted by the occupant shown in Figure 1; and
Figure 6 is similar to Figure 5, but shows the occupant impacting a center console having an armrest according to the present invention.

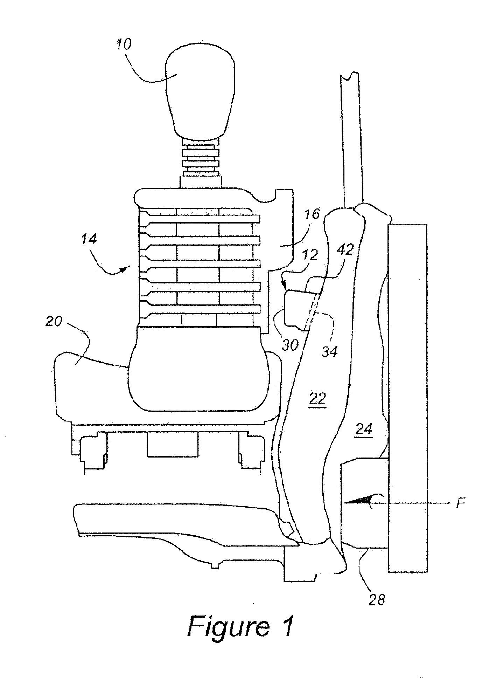

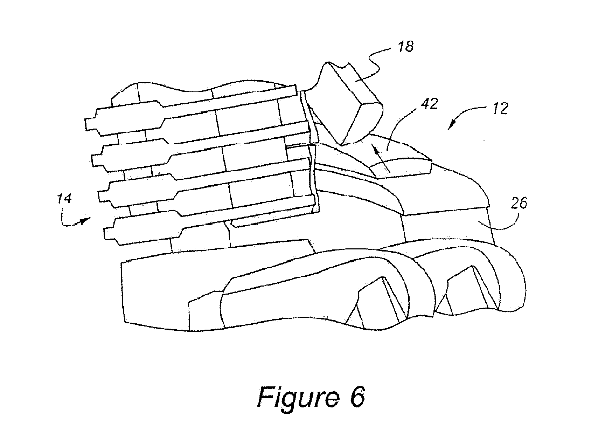

As shown in Figure 1, vehicle occupant 10 is seated upon a seat cushion, 20. Occupant 10 has arm 16, which is poised in Figure 1 to be placed upon armrest assembly 12. More precisely, occupant arm 16 is poised to be placed upon arm contact member 42, which extends generally horizontally at the upper surface of armrest assembly 12. The armrest assembly 12 is mounted to a mounting base, which, in the case of Figure 1, is door trim panel 22. In the illustration of Figure 6, armrest assembly 12 is mounted to a center storage console, 26.

Occupant 10 has a thoracic region, 14, which may contact armrest 12 during certain side directed impact events. In Figure 1, vehicle door 24 is shown as being an impacted by a pendulum type of test device, 28, which causes deformation of door 24 including trim panel 22, with the impact ultimately resulting in a contact between thoracic region 14 of occupant 10 and armrest assembly 12.

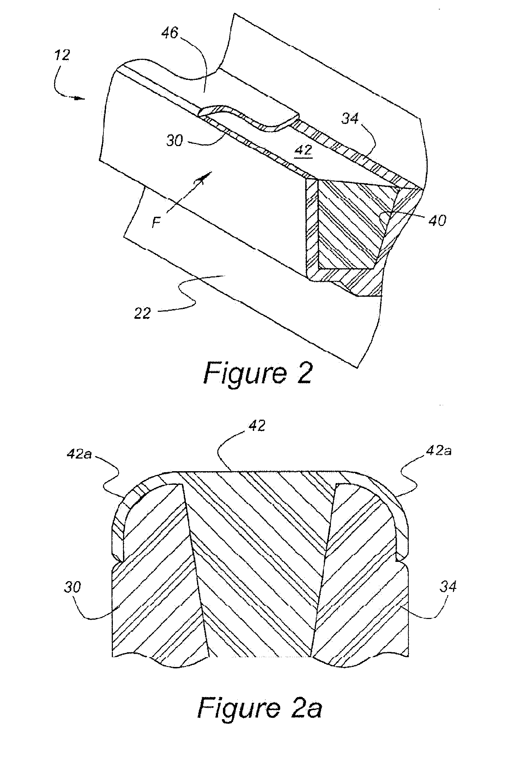

Figures 2 and 2a illustrate the structural attributes of armrest 12 which cause its dynamic deconstruction during an impact event. Inner wall 30 and outer wall 34 define a cavity, 40, which, although having a generally rectangular configuration, tapers and, in the example shown, is frustum-shaped. The arm contact member 42 also has a tapering shape to match the cavity 40 and forms a translatable plug. This tapering plug shape causes a ramping effect when armrest 12 is impacted by a force, (F), directed as shown in Figure 2. The walls 30 and 34 cause the arm contact member 42 to be locally deformed/ extruded or expelled from cavity 40. Once, arm contact member 42 has become only slightly misaligned with walls 30 and 34, the force/deflection curve in the direction F of Figure 2 becomes greatly reduced, so as to present a softer surface to the thoracic region 14 of occupant 10. In the construction of Figure 2a, arm contact surface 42 has two portions, 42a which depend over inner wall 30 and outer wall 34, as an alternate structure for trimming the interface between arm contact member 42 and walls 30 and 34. In the embodiment of Figure 2, cover 46, in which may be constructed of plastics, such as vinyl or other materials, is applied over the upper surfaces of armrest 12 in order to conceal the joint between arm contact member 42 and walls 30 and 34.

Walls 30, 34 and arm contact member 42 are preferably formed from plastic material such as polypropylene or acrylonitrile butadiene styrene (ABS). Contact member 42 is preferably a tight, wedge fit within cavity 40. It is further preferable that member 42 be retained within cavity 40 without the use of adhesives or ultrasonic bonding.

Because dislocation of arm contact member 42 with respect to cavity 40 occurs only when a laterally directed compressive force having a magnitude in excess of a predetermined threshold is directed against walls 30 or 34, pulling upon the armrest, or leaning upon the armrest during normal use will not cause displacement of arm contact member 42. However, an impact load will cause translational movement of the arm contact member 42 with respect to cavity 40.

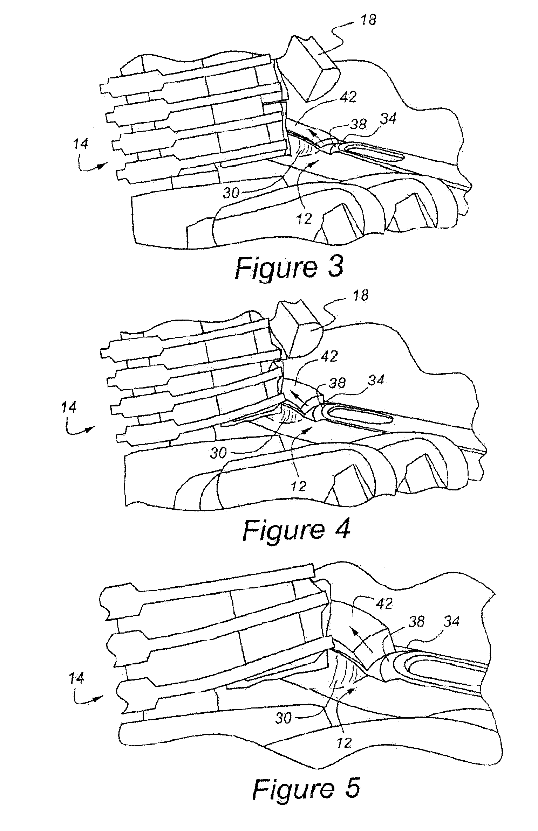

Figures 3-5 illustrate the sequential engagement of thoracic region 14 of occupant 10 with armrest 12 during an impact event, accompanied by the deconstruction of armrest 12.

In Figure 3, arm contact member 42 is shown as being dislocated slightly from inner wall 30 and outer wall 34, while still contacting end wall 38.

In Figure 4, it is noted that arm contact member 42 has become expelled to a greater degree from cavity 40 and, inner wall 30 has become deformed as well.

In Figure 5, end wall 38, inner wall 30, and outer wall 34 are all deformed, as is arm contact member 42, which has become even more dislocated translationally from its original position within cavity 40.

In Figure 6, occupant 10 is shown as contacting centre console 26, having an armrest 12 according to the present invention. Armrest 12 is shown as during one of the initial stages of deconstruction similar to those illustrated in Figure 3. The mechanics of deconstruction of the embodiment shown in Figure 6 are similar to those illustrated in Figures 3-5.

It will be appreciated that one or more of the walls 30, 34 could be formed as part of the door trim panel 22 or the centre console 26, that is to say the cavity 40 could be formed as an integral part of the door trim panel 22 or the centre console 26 or could be defined by walls 30, 34 that are fastened to the door trim panel 22 or the centre console 26.

Therefore in summary, an armrest system according to the present invention is dynamically deconstructable in that an impact directed against the armrest having a magnitude in excess of a predetermined threshold value will cause the armrest to change geometry as a portion of the armrest is expelled from alignment with its mating portion. This deconstruction modulates or reduces the energy input into an occupant of a motor vehicle during a side impact event.

A dynamically deconstructable armrest for an automotive vehicle is disclosed having a mounting base, a plurality of walls extending from the mounting base to define a cavity, and an arm contact member inserted into the cavity such that a compressive force directed against at least one of the walls, and having a magnitude in excess of a predetermined threshold value, will cause a portion of the arm contact member to become expelled from the cavity, so as to deconstruct the armrest. The mounting base may be incorporated either within a door trim panel, within a center storage console of a vehicle or within other vehicular structures upon which an armrest is mounted.

A cover preferably extends over the arm contact member and the plurality of walls. The arm contact member, which is preferably a plug fit within the cavity defined by the armrest walls, may either end at the top of the walls or may extend externally of the walls. If the arm contact member extends externally of the walls, the dynamic compressive force direct against at least one of the side walls will cause the armrest to disengage from an exterior portion of the sidewalls. In this manner, the armrest will be dynamically deconstructed.

In essence, a dynamic compressive force directed against at least one of the side walls of the armrest and having a magnitude in excess of a predetermined threshold value will cause at least a portion of the arm contact member, or insert, to deform and to move translationally from the cavity such that the compressive strength of the armrest will be reduced. The arm contact member is preferably generally frustum-shaped and matches a frustum-shaped cavity formed within the armrest base by a plurality of upstanding walls. This wedge-shaped construction causes the arm contact member to be moved translationally or to squirm from its installed position in response to a compressive load directed against the side of the armrest, such as the load imposed upon the thoracic region of a motorist during an impact event is lessened.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention.

## Claims

1. An armrest assembly (12) for a motor vehicle **characterised in that** the armrest assembly (12) comprises a displaceable arm contact member (42) located in a cavity (40) defined by a plurality of walls (30, 34), the shape of at least one of the cavity (40) and the arm contact member (42) is such that a compressive force having a magnitude in excess of a predetermined threshold value directed against at least one of the walls (30,34) will cause the arm contact member (42) to be displaced relative to the cavity (40) so as to reduce the compressive strength of the armrest assembly (12).

2. An armrest assembly as claimed in claim 1 wherein at least one of the cavity (40) and the arm contact member (42) has a tapered shape so as to cause the displacement of the arm contact member (42) when the compressive force having a magnitude in excess of a predetermined threshold value is directed against at least one of said walls (30, 34).

3. An armrest assembly as claimed in Claim 1 or in Claim 2 wherein said cavity (40) has a generally rectangular plan configuration.

4. An armrest assembly as claimed in any of Claims 1 to 3 wherein the arm contact member (42) is a plug fit within the cavity (40).

5. An armrest assembly as claimed in any of Claims 1 to 4 wherein the cavity is a generally frustum-shaped cavity (40) and the arm contact member is a generally frustum-shaped arm contact member (42).

6. An armrest assembly as claimed in any of Claims 1 to 5 wherein the armrest assembly (12) further comprises a mounting base (22) from which the plurality of walls (30,34) extend to define the cavity (40).

7. An armrest assembly as claimed in Claim 6 wherein the mounting base is a door trim panel (22).

8. An armrest assembly as claimed in Claim 7 wherein one of the walls (34) is formed as an integral part of the door trim panel (22).

9. An armrest assembly as claimed in Claim 7 wherein the mounting base is part of a centre storage console (26).

10. A motor vehicle having at least one armrest assembly as claimed in any of Claims 1 to 9.
